Europäisches Patentamt

**European Patent Office**

**Office européen des brevets**

(11) Numéro de publication: **0 167 211**
**A1**

(12) **DEMANDE DE BREVET EUROPEEN**

(21) Numéro de dépôt: **85201037.0**

(22) Date de dépôt: **28.06.85**

(51) Int. Cl.⁴: **G 05 B 23/02**
**G 05 B 19/04**

(30) Priorité: **03.07.84 FR 8410512**

(43) Date de publication de la demande:
**08.01.86 Bulletin 86/2**

(84) Etats contractants désignés:
**DE FR GB IT**

(71) Demandeur: **Laboratoires d'Electronique et de Physique Appliquée L.E.P.**
**3, Avenue Descartes**
**F-94450 Limeil-Brévannes(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**DE GB IT**

(72) Inventeur: **Hazan, Jean-Pierre Société Civile S.P.I.D.**
**209, rue de l'Université**
**F-75007 Paris(FR)**

(72) Inventeur: **Steers, Michel Société Civile S.P.I.D.**
**209, rue de l'Université**
**F-75007 Paris(FR)**

(74) Mandataire: **Landousy, Christian et al,**
**Société Civile S.P.I.D. 209, Rue de l'Université**
**F-75007 Paris(FR)**

(54) **Machine à laver munie d'un circuit d'interface numérique adaptateur, assurant la communication avec un lecteur de carte à mémoire électronique, et machine à laver à carte électronique.**

(57) L'invention concerne une machine à laver le linge ou autres, contrôlée par un microprocesseur, qui gère, à l'aide d'une pluralité de capteurs, le fonctionnement des organes essentiels de la machine à laver et en décèle un dérangement éventuel. Elle est caractérisée en ce que la machine à laver comprend, géré par le microprocesseur, un circuit d'interface numérique adaptateur (30) qui possède:

- des moyens de mémorisation des valeurs de consigne optimales de la pluralité de capteurs (32).

- des moyens de mémorisation des informations fonctionnelles (31) relatives à l'état de fonctionnement de tout ou partie de la pluralité de capteurs,

- et des moyens de communication (33) pour échanger les informations fonctionnelles avec un dispositif de lecture/écriture à carte à mémoire électronique (50).

Les valeurs de consigne optimales étant évolutives, ceci permet d'effectuer une programmation du fonctionnement de la machine à laver.

Il est également possible, selon l'invention, d'incorporer le dispositif de lecture/écriture à carte à mémoire électronique dans la machine à laver afin d'obtenir une machine à laver à carte à mémoire électronique.

FIG.1

## MACHINE A LAVER MUNIE D'UN CIRCUIT D'INTERFACE NUMERIQUE ADAP-TATEUR, ASSURANT LA COMMUNICATION AVEC UN LECTEUR DE CARTE A MEMOIRE ELECTRONIQUE, ET MACHINE A LAVER A CARTE ELECTRONIQUE

L'invention concerne une machine à laver le linge ou autres, contrôlée par un microprocesseur, qui gère, à l'aide d'une pluralité de capteurs, le fonctionnement des organes essentiels de la machine à laver et en décèle un dérangement éventuel.

Une telle machine à laver décelant un dérangement éventuel d'un des organes est décrite dans le brevet français n° 2 444 742 déposé le 18 décembre 1978 au nom de la Société Anonyme dite "CONSTRUCTIONS ELECTRO-MECANIQUES D'AMIENS".

Les machines à laver sont désormais équipées de plusieurs circuits imprimés électroniques assurant un nombre sans cesse croissant de fonctions nouvelles. Ceci crée une difficulté accrue pour le dépanneur, qui doit déceler rapidement et sans erreur le composant ou la partie de circuit imprimé qui peut être cause du dérangement. Pour cela, le brevet français cité met à profit la présence d'un microprocesseur dans la machine à laver pour définir un dispositif d'introduction de paramètres et déterminer un procédé de contrôle de la machine à laver. Ce procédé met en oeuvre des séquences de test que le dépanneur effectue pas à pas, et qui lui permettent de contrôler, à l'aide de dispositifs lumineux, le fonctionnement correct des organes à tester.

Ainsi, le personnel de maintenance habituel peut détecter à coup sûr un dérangement éventuel de l'un quelconque des circuits imprimés, et procéder à l'échange standard de celui-ci. Ce dépannage est presque toujours effectué sur place, par un personnel qui doit avoir une qualification sans cesse croissante. Or il est également courant que le dépanneur, après avoir décelé une panne, ne puisse la réparer si la pièce défectueuse lui fait défaut sur l'instant, ce qui entraine alors la nécessité d'un nouveau déplacement. La multiplicité des éléments constitutifs d'une machine à laver explique ce point.

L'invention a donc pour premier but d'éviter à un personnel qualifié d'effectuer un déplacement inutile en lui fournissant préalablement à son déplacement tous les renseignements codés relatifs à l'état de dérangement éventuel de la machine à laver.

Un second but de l'invention est de faire que ces renseignements codés soient prélevés par un personnel non qualifié c'est-à-dire par l'utilisateur lui-même.

Un troisième but de l'invention est de faire que l'utilisateur puisse introduire lui-même dans la machine à laver, un choix personnalisé de valeurs de fonctionnement pour les organes essentiels mis sous surveillance.

Pour cela l'invention concerne une machine à laver telle que définie dans le préambule remarquable en ce qu'elle comprend, géré par le microprocesseur, un circuit d'interface numérique adaptateur qui possède :

- des moyens de mémorisation des valeurs de consigne optimales de la pluralité de capteurs,

- des moyens de mémorisation des informations fonctionnelles relatives à l'état de fonctionnement de tout ou partie de la pluralité de capteurs,

- et des moyens de communication pour transmettre les informations fonctionnelles à un dispositif de lecture/écriture à carte à mémoire électronique.

L'invention concerne également une structure d'exploitation d'une telle machine à laver associée à un dispositif de lecture/écriture à carte à mémoire électronique.

Elle concerne également une machine à laver à carte à mémoire électronique comprenant une telle machine à laver et un dispositif de lecture/écriture à carte à mémoire électronique.

L'invention sera mieux comprise à l'aide des dessins annexés qui représentent :

Figure 1 : un schéma électrique partiel d'une machine à laver munie du circuit d'interface numérique adaptateur selon l'invention.

Figure 2 : un schéma électrique analogue à celui de la figure 1 mais avec une mémoire reprogrammable en remplacement de la mémoire statique.

A l'intérieur d'une machine à laver représentée symboliquement par le repère 10, se trouvent un certain nombre d'organes de prélèvement d'information $20_1$ à $20_n$ appelés ci-après "capteurs". Ceux-ci peuvent être de nature différente. Il peut s'agir de capteurs classiques détectant le niveau d'eau, la température, la pression... ou de composants électroniques mis en relation avec un organe placé sous surveillance afin d'en détecter un éventuel dérangement. Une manière classique est de disposer une résistance en série ou en parallèle avec un tel organe de telle sorte qu'une défaillance de celui-ci entraine une variation mesurable de la tension aux bornes de la résistance. Il peut également s'agir d'un élément comparant une tension électrique de référence à la valeur de la tension en un point particulier liée à un organe ou un circuit à surveiller. Cet élément de comparaison délivre un signal électrique dans le cas où un écart apparaît.

Les capteurs fournissent leurs données à un bus, par exemple le bus bi-fils 39, connecté au microprocesseur. Les informations issues des capteurs peuvent être acheminées de plusieurs manières. Ainsi un capteur, par exemple le capteur $20_1$, dispose d'un convertisseur analogique-numérique A/N transformant le signal analogique issu du capteur en un signal numérique, qui, préférentiellement, est envoyé au microprocesseur en mode série, sur le bus bi-fils, un fil pour les données et un fil pour le contrôle. Le capteur $20_1$, pris à titre d'exemple, contient en plus du convertisseur analogique-numérique A/N, un dispositif de reconnaissance d'adresse qui lui permet de mettre sur le bus bi-fils, connecté au microprocesseur, ses informations fonctionnelles lorsqu'il reconnaît un appel issu du microprocesseur.

Mais au lieu d'associer, à chacun ou à certains des capteurs, un convertisseur analogique-numérique A/N, il peut être plus économique de regrouper certains capteurs autour d'un nombre limité de convertisseurs analogique-numérique, voire un seul convertisseur analogique-numérique, la reconnaissance des adresses propres à chaque capteur se faisant alors après la numérisation des signaux analogiques.

Dans une première conception des moyens de mémorisation des valeurs de consigne optimales, le circuit d'interface numérique adaptateur 30 comprend une mémoire vive numérique 31, une mémoire statique 32 et des moyens de communication 33.

La mémoire statique 32 peut être constituée par la mémoire habituellement appelée ROM (Read Only Memory en langue anglaise). Elle peut également, pour une partie, être constituée d'éléments "mémoire" délivrant en fonctionnement normal une tension de référence, (ou une tension nulle), adaptée aux circuits d'entrée du microprocesseur et que celui-ci interprétera comme correspondant à un état logique haut ou bas selon la correspondance choisie. En cas de fonctionnement anormal ladite tension de référence disparaîtra (ou apparaîtra), et ceci sera interprété par le microprocesseur comme l'état logique inverse du précédent. La fonction mémoire est dans ce cas assurée par l'élément "mémoire" lui-même, du fait qu'il conserve l'état électrique représentatif du dérangement. Chaque capteur possède, dans la mémoire statique 32, une valeur de consigne optimale qui le caractérise.

Le microprocesseur 40 compare les informations stockées dans la mémoire statique 32 avec les informations fonctionnelles issues de la pluralité de capteurs. Lorsque le microprocesseur décèle une divergence entre les couples de valeurs à comparer, un signal de lecture est envoyé par le microprocesseur par la connexion 41 à la mémoire vive numérique 31. Celle-ci prélève alors séquentiellement les données issues des capteurs grâce au circuit de contrôle 34 actionné par l'horloge 48 du microprocesseur et par le signal de contrôle du bus bi-fils. Simultanément le voyant 45 alerte l'utilisateur qu'un dérangement de la machine à laver vient de se présenter. L'utilisateur va ainsi pouvoir établir la connexion entre le dispositif de lecture/écriture 50 pour carte à mémoire électronique et la machine à laver 10 après avoir inséré la carte à mémoire électronique 55. L'utilisateur initialise alors, à l'aide du poussoir 46, le transfert des données contenues dans la mémoire vive numérique 31 vers le dispositif 50. Ce transfert s'effectue à travers les moyens de communication 33 sous contrôle du microprocesseur 40 grâce aux connexions 41 et 42.

Selon une première variante et dans un premier mode de réalisation, les moyens de communication 33 sont constitués d'un circuit de conversion parallèle-série qui reçoit en parallèle les m données binaires qui constituent chacun des n mots binaires délivrés par les n capteurs $20_1$ à $20_n$. Ces m données binaires, apparaissant en parallèle sur le bus de connexion 43 (disposant de m connexions), sont transformées en données série sur le fil de connexion 44. Cet échange est contrôlé par le signal de synchronisation 47. Les données ainsi transférées sont chargées dans la carte à mémoire électronique 55. Cette carte va ainsi contenir toutes les données concernant l'état de tous les capteurs. Elle est alors disponible pour être acheminée vers le centre de dépannage. Ceci se fait par voie postale ou par le système public d'échange de données numériques. Le dépanneur introduit la carte dans un dispositif de lecture qui lui donne en clair l'état des capteurs et ainsi la nature du dérangement. Ainsi avant d'effectuer tout déplacement il peut s'aprovisionner en pièces de rechange.

Selon un second mode de réalisation, les moyens de communication 33 sont constitués d'un circuit numérique qui assure le transfert parallèle-parallèle des données présentes sur le bus de connexion 43 vers le bus de connexion 44, qui dans ce cas possède m fils de connexion, sous le contrôle des signaux présents sur les connexions 42 et 47.

La structure d'exploitation selon cette première variante est ainsi constituée de la machine à laver, munie du circuit numérique d'interface adaptateur, associée au dispositif de lecture/écriture pour carte à mémoire électronique.

Selon une seconde variante, le dispositif de lecture/écriture pour carte à mémoire électronique est incorporé à la machine à laver. Il s'agit alors d'une machine à laver à carte électronique comprenant une machine à laver munie d'un circuit d'interface numérique adaptateur et d'un dispositif de lecture/écriture pour carte à mémoire électronique.

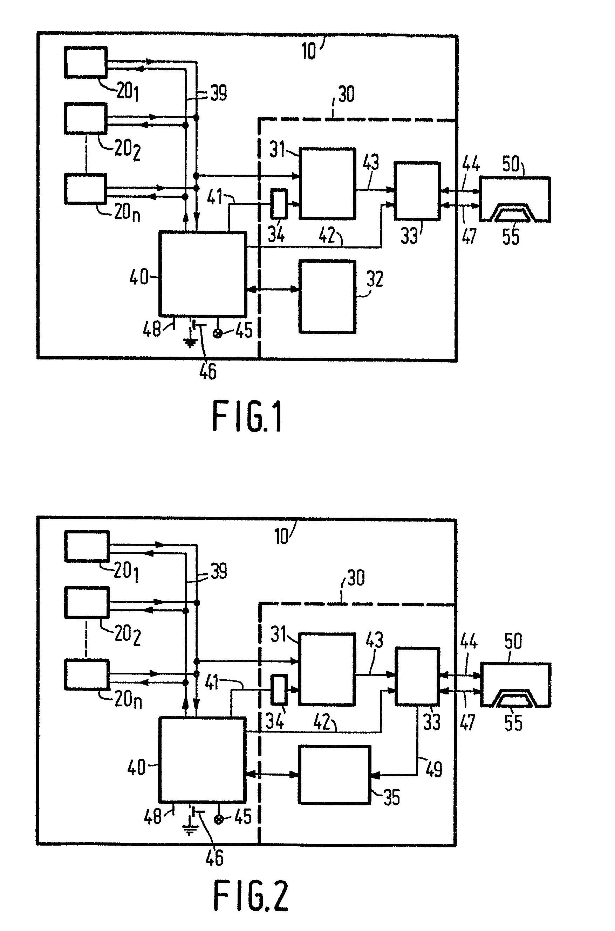

Dans une seconde conception des moyens de mémorisation des valeurs de consigne optimales, telle que représentée sur la figure 2, la mémoire statique 32 est remplacée par la mémoire reprogrammable 35. En effet les valeurs de consigne optimales de la pluralité de capteurs sont représentatives du point optimal de fonctionnement de l'organe auquel chaque capteur est associé. Mais il est parfois utile de modifier ce point optimal de fonctionnement d'un organe en fonction de l'usage que l'on entend avoir de la machine à laver. Ainsi, dans l'opération de lavage, il est avantageux, selon la nature du linge, de modifier la durée de rotation du tambour pour chacun des deux cycles alternés de rotation. De la même façon les vitesses d'essorage peuvent être modifiées et adaptées aux souhaits de l'utilisateur. Ces deux cas sont cités à titre d'exemples, mais pour pratiquement chaque organe essentiel de la machine à laver, l'utilisateur a la possibilité de le faire fonctionner sur une plage plus étendue. Les valeurs de consigne optimales de la pluralité de capteurs sont donc évolutives dans cette seconde conception de l'invention pour suivre les caractéristiques évolutives des organes de la machine à laver. Pour pouvoir être remises à jour les valeurs de consigne optimales sont stockées dans une mémoire reprogrammable. Celle-ci est par exemple une mémoire statique électriquement effaçable.

Dans ce cas le dispositif de lecture/écriture 50 fournit à la mémoire reprogrammable 35, par la connexion 44, à travers les moyens de communication 33, et à l'aide des connexions d'écriture 49, des signaux de contrôle et des données renouvelées des valeurs de consigne optimales. Après ce renouvellement des données, l'ensemble du processus de traitement décrit selon la première conception s'effectue alors de manière identique.

Mais en outre, il est également possible d'écrire dans la mémoire reprogrammable des données qui permettront au microprocesseur de sélectionner les informations qui sont à écrire dans la carte électronique. On dispose ainsi également d'une structure d'exploitation ou d'une machine à laver à carte électronique selon cette seconde conception des moyens de mémorisation des valeurs de consigne optimales.

REVENDICATIONS :

1.       Machine à laver le linge ou autres, contrôlée par un microprocesseur, qui gère, à l'aide d'une pluralité de capteurs, le fonctionnement des organes essentiels de la machine à laver et en décèle un dérangement éventuel, caractérisée en ce qu'elle comprend, géré par le microprocesseur, un circuit d'interface numérique adaptateur qui possède :
- des moyens de mémorisation des valeurs de consigne optimales de la pluralité de capteurs,
- des moyens de mémorisation des informations fonctionnelles relatives à l'état de fonctionnement de tout ou partie de la pluralité de capteurs,
- et des moyens de communication pour échanger les informations fonctionnelles avec un dispositif de lecture/écriture à carte à mémoire électronique.

2.       Machine à laver selon la revendication 1, caractérisée en ce que les moyens de mémorisation stockant les valeurs de consigne optimales de la pluralité de capteurs sont constitués d'une mémoire statique.

3.       Machine à laver selon la revendication 1, caractérisée en ce que les moyens de mémorisation stockant les valeurs de consigne optimales de la pluralité de capteurs, sont constitués d'une mémoire reprogrammable.

4.       Machine à laver selon une des revendications 1 à 3, caractérisée en ce que les moyens de mémorisation stockant les informations fonctionnelles de la pluralité de capteurs sont constitués d'une mémoire numérique vive.

5.       Machine à laver selon une des revendications 1 à 4, caractérisée en ce que les moyens de communication sont constitués d'un circuit de conversion parallèle-série adaptant le format de données parallèles des moyens de mémorisation des informations fonctionnelles en format de données série pour le dispositif à carte à mémoire électronique.

6.       Structure d'exploitation d'une machine à laver selon l'une des revendications 1 à 5, caractérisée en ce

PHF84/556 EP

qu'elle comprend une machine à laver munie d'un circuit d'interface numérique adaptateur associée à un dispositif de lecture/écriture à carte à mémoire électronique.

7.      Machine à laver à carte électronique, caractérisée en ce qu'elle comprend une machine à laver selon une des revendications 1 à 5, et en outre un dispositif de lecture/écriture à carte à mémoire électronique.

FIG.1

FIG.2

# 0167211

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| Y | GB-A-2 124 794 (TECHNOLOGY TRANSFER SERVICES)<br>* En entier * | 1-4 | G 05 B 23/02<br>G 05 B 19/04 |
| Y | DE-A-3 146 566 (BOSCH-SIEMENS)<br>* Revendications 1,16 * | 1-4 | |
| Y | US-A-4 291 388 (ALLEN BRADLEY)<br>* Abrégé * | 2-4 | |
| A | US-A-3 701 113 (DIGITAL EQUIPMENT)<br>* Abrégé; colonne 2, ligne 58 -colonne 3, ligne 23 * | 1-4 | |
| D,A | FR-A-2 444 742 (CONSTRUCTION ELECTROMECANIQUES D'AMIENS)<br>* En entier * | 1 | |

DOMAINES TECHNIQUES
RECHERCHES (Int Cl 4)

G 05 B

Le present rapport de recherche a été établi pour toutes les revendications

| Lieu de la recherche | Date d achèvement de la recherche | Examinateur |
|---|---|---|
| LA HAYE | 05-08-1985 | KOLBE W.H. |